# EUROPEAN PATENT APPLICATION

(11) **EP 3 038 299 A1**
(43) Date of publication of application: **29.06.2016**
(21) Application number: 13894537.3
(22) Date of filing: 25.09.2013
(51) Int. Cl.: H04L 12/66

(54) **METHOD FOR RECORDING SESSION INFORMATION AND RECORDING SERVER**

(71) Applicant: Huawei Technologies Co., Ltd., Longgang District Shenzhen, Guangdong 518129 (CN)
(72) Inventor: WU, Jie, Shenzhen Guangdong 518129 (CN)
(74) Representative: Goddar, Heinz J.
(86) International application number: PCT/CN2013/084190
(87) International publication number: WO 2015/042801

(57) **Abstract**

Embodiments of the present invention disclose a session information recording method, where the method is executed by a recording server, the recording server is connected to a unified communications system and is configured to record a media packet and a signaling packet generated in the unified communications system. The recording server associatively records a received media packet, a received signaling packet, or a combination thereof based on a session. The method provided in the present invention expands application scenarios of associative recording and can resolve a problem in the prior art that a media packet and a signaling packet cannot be associatively recorded in many scenarios.

## Description

### TECHNICAL FIELD

The present invention relates to the field of network communications, and in particular, to a session information recording method and a recording server.

### BACKGROUND

At present, a unified communications system of an enterprise supports multiple services including a call center, a conference, instant messaging, and the like. When a call center is deployed in a bank system, and a user establishes a session with the call center by using a terminal, in addition to voice communication between the user and an agent, some critical information may be exchanged by performing a key operation, for example, inputting an identity card number, or selecting a suitable service. In addition, using a multi-party conference that is joined by multiple members and involves audio and video, and desktop data as an example, in addition to exchange of a large number of media streams, conference members may perform some signaling operations during the conference, for example, an operation performed by a conference member to join or exit a conference site during the conference.

In order to satisfy an enterprise's effective management on these conferences, for example, overall playback of a conference process, there is a solution in the prior art in which audio and video including information represented in a form of a media stream such as shared desktop data and an instant message may be recorded synchronously during a call with a call center, or audio and video media streams in a conference process may be recorded. In addition, a solution is also proposed in the prior art, that is, both key exchange information and media packets between a user and a call center are recorded, or in a conference process, both signaling packets and media packets generated when a conference user performs key operations on a conference terminal are recorded. Specifically, a recording client is installed in a unified communications server in the unified communications system. In a process of establishing a session in the unified communications system and during the session, the recording client associates and buffers signaling packets and media packets related to the session, and sends the buffered signaling packets and media packets to a recording server, so that the recording server records the signaling packets and the media packets of the session.

### SUMMARY

Embodiments of the present invention provide a session recording method and a recording server, which can implement association and recording of a media packet and a signaling packet.

According to a first aspect, an embodiment of the present invention provides a session information recording method, where the method is executed by a recording server, the recording server is connected to a unified communications system and is used to record session information generated in the unified communications system, and the method includes:
acquiring the session information generated in the unified communications system, where the session information includes at least one of a media packet and a signaling packet, and the session information includes source information and target information of a session; and
when it is determined that first session information that has same source information and same target information as the received session information exists in session information stored in the recording server, and signaling that indicates session termination does not exist in the first session information, caching, according to a cache location index of the first session information in the recording server, the received session information in a first cache block indicated by the cache location index, so that the received session information is associated with the first session information; or
when it is determined that first session information that has same source information and same target information as the received session information does not exist in session information stored in the recording server, or when it is determined that first session information that has same source information and same target information as the received session information exists in session information stored in the recording server, and the first session information includes signaling that indicates session termination, caching the received session information in an unused second cache block, and recording a cache location index of the second cache block.

With reference to the first aspect, in a first possible implementation manner, after the caching the received session information in an unused second cache block, the method further includes: recording source information and target information of a session that are in the second cache block, and recording a correspondence between the cache location index of the second cache block and the source information and the target information of the session that are in the second cache block; and the determining that first session information that has same source information and same target information as the received session information exists or does not exist in session information stored in the recording server specifically includes: determining, according to the recorded source information and target information, that the first session information that has the same source information and the same target information as the received session information exists or does not exist in the session information stored in the recording server.

With reference to the first aspect or the foregoing possible implementation manner, in a second possible implementation manner, when the session information in the second cache block includes a signaling packet, and the signaling packet includes a session identifier, after the caching the received session information in an unused second cache block, the method further includes: recording the session identifier in the signaling packet, and a correspondence between the session identifier and the cache location index of the second cache block; and the method further includes: receiving an invoking request sent by an external device, where the invoking request includes a session identifier of a session that needs to be invoked; querying the correspondence between the session identifier and the cache location index of the second cache block according to the session identifier in the invoking request; determining a cache location index corresponding to the session identifier in the invoking request; and obtaining session information that is cached in a cache block indicated by the determined cache location index, and sending the obtained session information to the external device.

With reference to the first aspect or either of the foregoing possible implementation manners, in a third possible implementation manner, the unified communications system is a call center system, and the call center system includes: a switching device, a first automatic call distributor, a computer telephony integration device, and an agent terminal registered with the first automatic call distributor, where: a call that a user terminal initiates to the call center is connected to the first automatic call distributor by using the switching device, and then is submitted to the computer telephony integration device by the first automatic call distributor; the computer telephony integration device assigns the agent terminal registered with the first automatic call distributor for the call; and a first recording client is installed in the computer telephony integration device, and the first recording client is connected to the recording server; and the acquiring the session information generated in the unified communications system includes: receiving session information that is processed by the computer telephony integration device and is sent by the first recording client.

With reference to the foregoing third possible implementation manner, in a fourth possible implementation manner, the call center system further includes a second automatic call distributor connected to the computer telephony integration device, and a second recording client is installed in the recording server; and the acquiring the session information generated in the unified communications system further includes: after the second recording client that is installed in the recording server receives an invitation of the second automatic call distributor and then joins a conference site created by the second automatic call distributor, receiving a media packet in the conference site, where participants in the conference site further include the user terminal and the agent terminal.

With reference to the foregoing first aspect or any one of the first to the third possible implementation manners, in a fifth possible implementation manner, the unified communications system is a multi-level conference system, the multi-level conference system includes a main conference site server and a branch conference site server, a recording client is installed in the main conference site server, a mirror port is configured in the branch conference site server, and the recording server is separately connected to the recording client and the mirror port; and the acquiring the session information generated in the unified communications system includes: receiving session information that is processed in the main conference site server and is sent by the recording client, and session information that is processed in the branch conference site server and is sent by the branch conference site server using the mirror port in a mirroring manner.

With reference to the foregoing first aspect or any one of the first to the third possible implementation manners, in a sixth possible implementation manner, the unified communications system is a multi-level conference system, the multi-level conference system includes a main conference site server and a branch conference site server, a first recording client is installed in the main conference site server, the recording server is connected to the first recording client, and a second recording client is installed in the recording server; and the acquiring the session information generated in the unified communications system includes: receiving session information that is processed in the main conference site server and is sent by the first recording client, and after the second recording client in the recording server receives an invitation of the branch conference site server and then joins a branch conference site created by the branch conference site server, receiving a media packet in the branch conference site.

With reference to the foregoing first aspect or any one of the first to the third possible implementation manners, in a seventh possible implementation manner, the unified communications system is a three-level conference system, and the three-level conference system includes: a main conference site server, a branch conference site server for a second-level conference site, and a branch conference site server for a third-level conference site, where a first recording client is installed in the main conference site server, a mirror port is configured in the branch conference site server for the second-level conference site, the recording server is separately connected to the first recording client and the mirror port, and a second recording client is installed in the recording server; and the acquiring the session information generated in the unified communications system includes: receiving session information that is processed in the main conference site server and is sent by the first recording client, and session information that is processed in the branch conference site server for the second-level conference site and is sent by the branch conference site server using the mirror port in a mirroring manner, and after the second recording client in the recording server receives an invitation of the branch conference site server and then joins a branch conference site created by the branch conference site server, receiving a media packet in the branch conference site.

With reference to the first aspect or any one of the foregoing possible implementation manners, in another implementation manner, the session information includes a timestamp, and the recording server deduplicates the cached session information according to the timestamp.

According to a second aspect, an embodiment of the present invention provides a recording server, and the recording server includes a network interface, a network interface data transceiving module, a processor, and a cache, where the network interface data transceiving module is configured to acquire, by using the network interface, session information generated in a unified communications system, and send the acquired session information to the processor, where the session information includes at least one of a media packet and a signaling packet, and the session information includes source information and target information of a session; and the processor is configured to: when it is determined that first session information that has same source information and same target information as the session information received from the data transceiving network interface exists in session information stored in the recording server, and signaling that indicates session termination does not exist in the first session information, cache, according to a cache location index of the first session information in the recording server, the received session information in a first cache block that is in the cache and indicated by the cache location index, so that the received session information is associated with the first session information; or the processor is further configured to: when it is determined that first session information that has same source information and same target information as the session information received from the data transceiving network interface does not exist in session information stored in the recording server, or when it is determined that first session information that has same source information and same target information as the session information received from the data transceiving network interface exists in session information stored in the recording server, and the first session information includes signaling that indicates session termination, cache the received session information in an unused second cache block in the cache, and record a cache location index of the second cache block.

With reference to the second aspect, in a first possible implementation manner, the processor is further configured to: after the received session information is cached in the unused second cache block, record source information and target information of a session that are in the second cache block, and record a correspondence between the cache location index of the second cache block and the source information and the target information of the session that are in the second cache block; and that the processor is configured to determine that the first session information that has the same source information and the same target information as the received session information exists or does not exist in the session information stored in the recording server specifically includes: determining, according to the recorded source information and target information, that the first session information that has the same source information and the same target information as the received session information exists or does not exist in the session information stored in the recording server.

With reference to the second aspect or the foregoing possible implementation manner, in another possible implementation manner, the network interface data transceiving module is further configured to receive, by using the network interface, an invitation request that is for joining a conference site and from an external device, return, to the external device by using the network interface, a response message that is for joining the conference site and from the processor, receive a media packet in the conference site, and send the received media packet to the processor; and the processor is further configured to return, to the external device according to the invitation request and by using the network interface data transceiving module, the response for joining the conference site, and receive the media packet.

With reference to the second aspect or either of the foregoing possible implementation manners, in another possible implementation manner, when the session information in the second cache block includes a signaling packet, and the signaling packet includes a session identifier, the processor is further configured to: after the received session information is cached in the unused second cache block, record the session identifier in the signaling packet and a correspondence between the session identifier and the cache location index of the second cache block; the network interface data transceiving module is further configured to receive, by using the network interface, an invoking request sent by an external device, where the invoking request includes a session identifier of a session that needs to be invoked, and the network interface data transceiving module sends the invoking request to the processor; and the processor is further configured to query the correspondence between the session identifier and the cache location index of the second cache block according to the session identifier in the invoking request, determine a cache location index corresponding to the session identifier in the invoking request, obtain session information that is cached in a cache block indicated by the determined cache location index, and send the obtained session information to the external device.

With reference to the second aspect or any one of the foregoing possible implementation manners, in another possible implementation manner, the session information further includes a timestamp, and the processor is further configured to deduplicate the cached session information according to the timestamp.

By using the technical solutions provided in the embodiments of the present invention, a recording server associates and stores, based on a session, received session information regardless of a media packet, a signaling packet, or a combination of a media packet and a signaling packet by uniformly using the foregoing manner, so that association and recording of the media packet and the signaling packet no longer depend on a unified communications server and has more extensive application scenarios.

### BRIEF DESCRIPTION OF DRAWINGS

FIG. 1 is a schematic diagram of a structure of a recording server according to the present invention;
FIG. 2 is a schematic diagram of a structure of a unified communications system according to an embodiment of the present invention;
FIG. 3A and FIG. 3B are a schematic flowchart of application of a recording server according to an embodiment of the present invention;
FIG. 4 is a schematic diagram of a structure of a unified communications system according to an embodiment of the present invention;
FIG. 5 is a schematic flowchart of application of a recording server according to an embodiment of the present invention;
FIG. 6 is a schematic diagram of a structure of a unified communications system according to an embodiment of the present invention;
FIG. 7A and FIG. 7B are a schematic flowchart of application of a recording server according to an embodiment of the present invention;
FIG. 8A and FIG. 8B are a schematic flowchart of application of a recording server according to an embodiment of the present invention;
FIG. 9A and FIG. 9B are a schematic flowchart of application of a recording server according to an embodiment of the present invention;

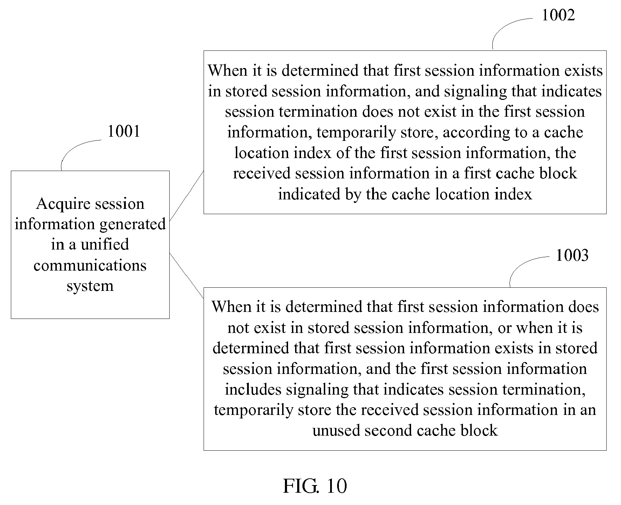

FIG. 10 is a schematic flowchart of a session information recording method according to an embodiment of the present invention; and
FIG. 11A and FIG. 11B are a schematic flowchart of a session information recording method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the prior art, association and recording of a signaling packet and a media packet depends on a unified communications server, and therefore an application scenario is subject to more restrictions. For example, when a media packet generated in a session between terminals is exchanged by using an underlying switching device and is not uploaded to the unified communications server, the unified communications server cannot associate a signaling packet and a media packet that are generated in the session. Another device in a unified communications system may not have a capability of parsing signaling and distinguish a session to which the signaling belongs. Therefore, a requirement of associating and recording a signaling packet and a media packet that are in a session cannot be satisfied depending on the solution in the prior art.

### Embodiment 1

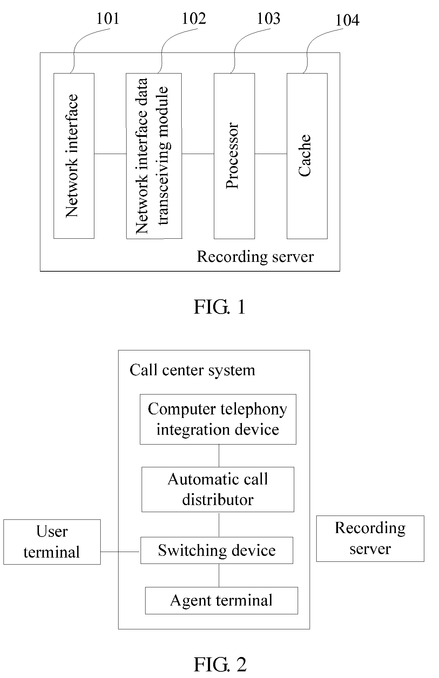

In view of the above, the present invention provides a recording server, which may be applied to more application scenarios. Specifically, the recording server is connected to a unified communications system and is used to associate and record a media packet and a signaling packet that are involved in a session process established by using the unified communications system. Specifically, as shown in FIG. 1, the recording server includes a network interface 101, a network interface data transceiving module 102, a processor 103, and a cache 104.

The network interface data transceiving module 102 acquires, by using the network interface 101, session information generated in the unified communications system, where the session information includes at least one of a media packet and a signaling packet, and the session information includes source information and target information of a session. The data transceiving network interface sends the acquired session information to the processor.

When it is determined that first session information that has same source information and same target information as the session information received from the data transceiving network interface exists in session information stored in the recording server, and signaling that indicates session termination does not exist in the first session information, the processor 103 caches, according to a cache location index of the first session information in the recording server, the received session information in a first cache block that is in the cache 104 and indicated by the cache location index, so that the received session information is associated with the first session information.

When it is determined that first session information that has same source information and same target information as the session information received from the data transceiving network interface does not exist in session information stored in the recording server, the processor 103 caches the received session information in an unused second cache block in the cache 104, and records a cache location index of the second cache block; or
when it is determined that first session information that has same source information and same target information as the session information received from the data transceiving network interface exists in session information stored in the recording server, and the first session information includes signaling that indicates session termination, the processor 103 caches the received session information in an unused second cache block in the cache 104, and records a cache location index of the second cache block.

Preferably, on the basis of the foregoing embodiment, the processor is further configured to: after the received session information is cached in the unused second cache block, record source information and target information of a session that are in the second cache block, and record a correspondence between the cache location index of the second cache block and the source information and the target information of the session that are in the second cache block. In addition, that the processor is configured to determine that the first session information that has the same source information and the same target information as the received session information exists or does not exist in the session information stored in the recording server specifically includes: determining, according to the recorded source information and target information, that the first session information that has the same source information and the same target information as the received session information exists or does not exist in the session information stored in the recording server.

Preferably, on the basis of the foregoing embodiment, the network interface data transceiving module 102 is further configured to receive, by using the network interface 101, an invitation request that is for joining a conference site and from an external device, return, to the external device by using the network interface, a response message that is for joining the conference site and from the processor, receive a media packet in the conference site, and send the received media packet to the processor 103. The processor 103 is further configured to return, to the external device according to the invitation request and by using the network interface data transceiving module 102, the response for joining the conference site, and receive the media packet.

Preferably, in order to implement invoking of recorded session information, on the basis of functions of the recording server disclosed in the foregoing embodiment, an invoking function is further included. Specifically, the session information in the second cache block includes a signaling packet, and the signaling packet includes a session identifier.

The processor is further configured to: after the received session information is cached in the unused second cache block, record the session identifier in the signaling packet, and a correspondence between the session identifier and the cache location index of the second cache block. In addition, the foregoing network interface data transceiving module 102 is further configured to receive, by using the network interface 101, an invoking request sent by an external device, where the invoking request includes a session identifier of a session that needs to be invoked, and the network interface data transceiving module 102 sends the invoking request to the processor 103. The processor 103 is further configured to query the correspondence between the session identifier and the cache location index of the second cache block according to the session identifier in the invoking request, determine a cache location index corresponding to the session identifier in the invoking request, obtain session information that is cached in a cache block indicated by the determined cache location index, and send the obtained session information to the external device.

In the foregoing embodiment, the source information includes a source IP address and may further include a source port number. The target information may include a destination IP address and may further include a destination port number.

In this embodiment of the present invention, a recording server associates and stores, based on a session, received session information regardless of a media packet, a signaling packet, or a combination of a media packet and a signaling packet by uniformly using the foregoing manner, so that association and recording of the media packet and the signaling packet no longer depend on a unified communications server and has more extensive application scenarios.

In the following embodiments, extensive application of the foregoing recording server is described with reference to a specific application scenario.

### Embodiment 2

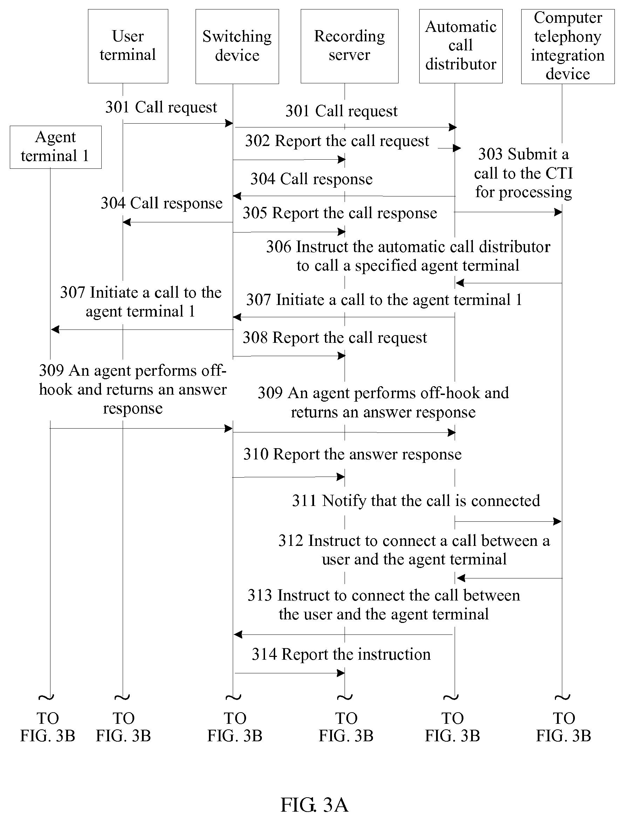

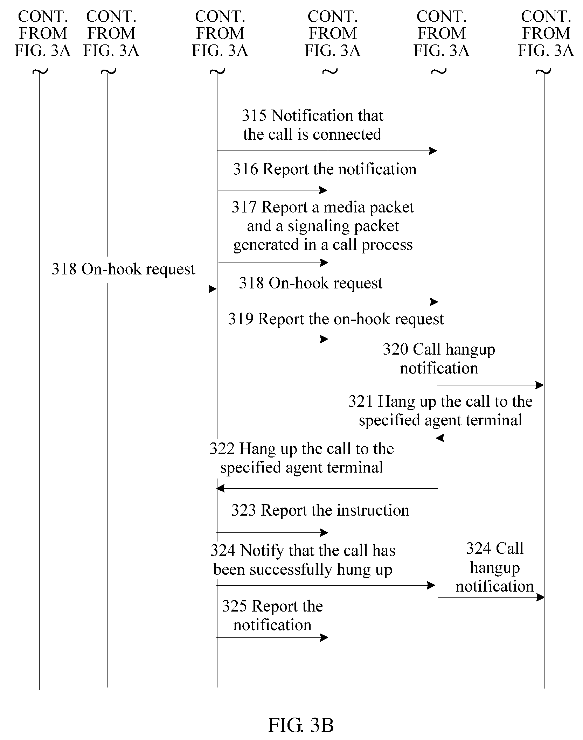

An embodiment of the present invention further provides an application scenario of the foregoing recording server. In this embodiment, a unified communications system is a call center system. As shown in FIG. 2, the call center system specifically includes: a switching device, an automatic call distributor (ACD, Automatic Call Distributor), a computer telephony integration (CTI, Computer Telephony Integration) device, and an agent terminal. A mirror port ("mirroring" or "Spanning") is configured in the switching device, and the switching device is connected to the recording server. The switching device sends, to the recording server by using the configured mirror port in a mirroring manner, all signaling packets and media packets in a call that is established by using the switching device and is between a user terminal and the call center system (including the agent terminal). Specifically, in the application scenario, as shown in FIG. 3A and FIG. 3B, a specific process in which the recording server acquires a media packet and a signaling packet includes the following steps:
Step 301: The user terminal initiates a call to the call center system, the call is connected to the switching device, and the switching device forwards the call request of the call to the automatic call distributor.
Step 302: After receiving the call request of the user terminal, the switching device further sends the call request to the recording server.
Step 303: The automatic call distributor submits the received call request to the CTI device for processing.
Step 304: After receiving the call request, the automatic call distributor responds to the call request and returns a call response to the switching device, and the switching device returns the call response to the user terminal. In this way, a call between the user terminal and the automatic call distributor is established.
Step 305: The switching device sends the received call response to the recording server.
Step 306: After receiving the call request sent by the automatic call distributor, the CTI device determines, according to a preset distribution rule, to distribute the call initiated by the user terminal to an agent terminal 1 managed by the automatic call distributor; afterwards, the CTI device sends an instruction for calling an agent terminal to the automatic call distributor, so as to instruct the automatic call distributor to call a specified agent terminal, that is, the agent terminal 1.
Step 307: The automatic call distributor sends, according to the instruction of the CTI device, a call request for calling the agent terminal 1 to the foregoing switching device, and sends the call request to the agent terminal 1 by using the foregoing switching device.
Step 308: The switching device sends the call request for calling the agent terminal 1 to the recording server.
Step 309: An agent of the agent terminal 1 performs off-hook and returns an response to the switching device, and the response is returned to the automatic call distributor by using the foregoing switching device, so as to respond to the call request. In this way, a call between the specified agent terminal and the automatic call distributor is established.
Step 310: The switching device reports, to the recording server, the response returned by the agent terminal 1.
Step 311: The automatic call distributor sends a notification message to the CTI device, so as to notify the CTI device that the call between the specified agent terminal and the automatic call distributor is connected.
Step 312: After learning, according to the received notification message sent by the automatic call distributor, that the call between the agent terminal and the automatic call distributor is connected, the CTI device sends an instruction to the automatic call distributor, so as to instruct the automatic call distributor to connect a call between the user terminal and the agent terminal. Specifically, in this embodiment, the call established between the automatic call distributor and the agent terminal and the call established between the automatic call distributor and the user terminal in the foregoing steps are connected as the call between the user terminal and the agent terminal.
Step 313: The automatic call distributor sends, to the foregoing switching device, the instruction for connecting the user terminal and the agent terminal 1. The switching device connects the user terminal and the agent terminal 1 according to the received instruction. In this way, a user to which the user terminal belongs and the agent of the agent terminal can start to communicate.
Step 314: The switching device sends, to the recording server, the instruction for connecting the user terminal and the agent terminal 1.
Step 315: The switching device sends, to the automatic call distributor, a notification message that the call is connected.
Step 316: The switching device sends, to the recording server, the notification message that the call is connected.
Step 317: The switching device receives a media packet and a signaling packet generated by both parties of the call in the call process, and sends the received media packet and signaling packet to the recording server.
Step 318: When the user hangs up the call, the user terminal sends an on-hook request to the switching device, and the on-hook request is sent to the automatic call distributor by the switching device.
Step 319: The switching device further sends the on-hook request to the recording server.
Step 320: After receiving the on-hook request, the automatic call distributor sends a call hangup notification to the CTI device, so as to notify the CTI device that the user terminal has hung up the call to the agent terminal 1.
Step 321: After receiving the call hangup notification, and learning that the user has hung up the call to the agent terminal 1, the CTI device returns an instruction for hanging up the call between the agent terminal 1 and the user terminal to the automatic call distributor.
Step 322: The automatic call distributor sends the instruction for hanging up the call between the agent terminal 1 and the user terminal to the switching device, and the switching device hangs up the call between the agent terminal 1 and the user terminal according to the instruction.
Step 323: The switching device sends the received instruction for hanging up the call between the agent terminal 1 and the user terminal to the recording server.
Step 324: After disconnecting a call channel between the agent terminal 1 and the user terminal, the switching device sends a notification message of successful call hangup to the automatic call distributor. The automatic call distributor feeds back a call hangup notification to the CTI device. The CTI device updates a state of the agent terminal 1 to an idle state for subsequent distribution.
Step 325: The switch sends the notification message of successful call hangup to the recording server.

### Embodiment 3

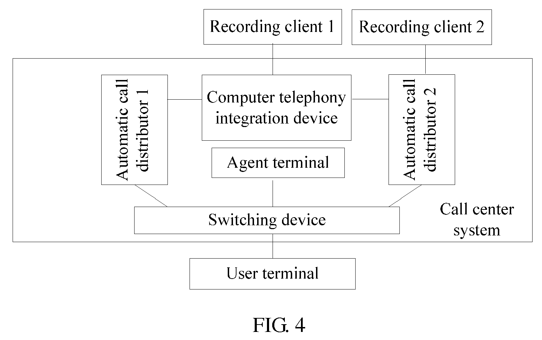

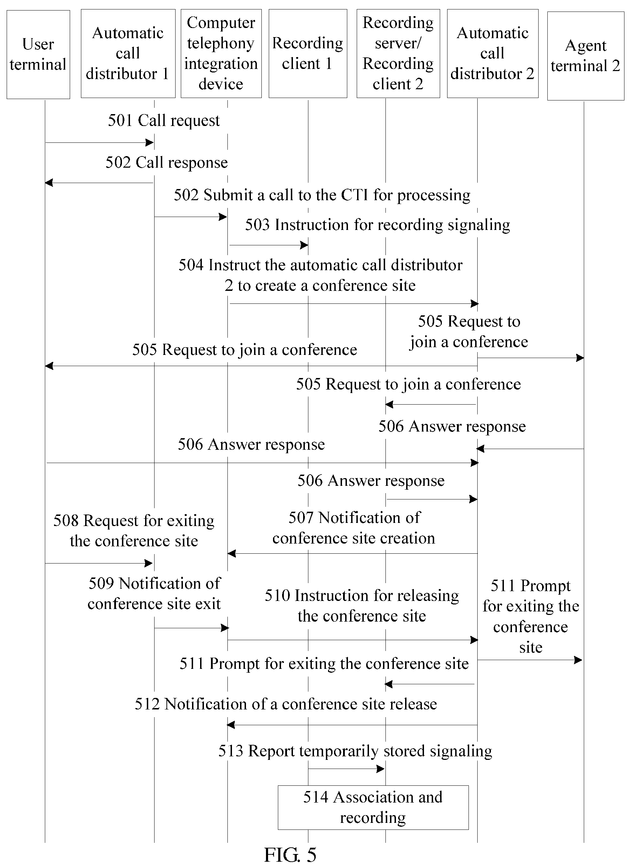

An embodiment of the present invention further provides another application scenario of the foregoing recording server. In this embodiment, a unified communications system is a call system. Referring to FIG. 4, the call center system further includes: a switching device, an automatic call distributor (ACD, Automatic Call Distributor) 1, an automatic call distributor 2, a computer telephony integration (CTI, Computer Telephony Integration) device, and an agent terminal. A recording client 1 is installed in the CTI device, the recording server is connected to the recording client 1, and the CTI device reports, to the recording server by using the recording client 1, a signaling packet and a media packet that are processed in the CTI device and are related to a session. In addition, a recording client 2 is installed in the recording server, the CTI instructs the automatic call distributor 2 to create a conference site, and add the recording client 2 to the conference site to receive a media packet in the conference site, and the recording server processes the media packet received by the recording client 2. Specifically, in the application scenario, as shown in FIG. 5, a specific process in which the recording server acquires a media packet and a signaling packet includes the following steps: (For ease of description, the CTI device and the recording client 1 are separately shown in the figure, but the switching device is not shown in the figure.)

Step 501: A user terminal initiates a call to the call center system, and the call is connected to the automatic call distributor 1. Specifically, the call is connected to the automatic call distributor 1 by using the switching device.

Step 502: The automatic call distributor 1 responds to the call of the user terminal and sends, to the CTI device, information related to the call of the user terminal. Specifically, a response message of the automatic call distributor 1 is also sent to the user terminal by using the switching device.

Step 503: The CTI device receives a call request sent by the automatic call distributor 1, and sends a signaling packet recording instruction to the recording client 1 so as to instruct the recording client 1 to start recording. In this embodiment, the CTI device sends, to the recording client 1, all signaling packets (including the foregoing call request) that pass through the CTI device, and the recording client 1 replicates and buffers all the signaling packets (which is not shown in the figure).

Step 504: When the CTI device determines that the automatic call distributor 1 has insufficient idle media resources, and the automatic call distributor 2 has sufficient idle media resources, the CTI device requests the automatic call distributor 2 to create a conference site. In addition, the CTI device determines, according to a preset distribution rule, to distribute the call initiated by the user terminal to an agent terminal 2 managed by the automatic call distributor 1. A message for requesting the automatic call distributor 2 to create the conference site includes identifier information of the user terminal, the agent terminal 2, and the recording client 2, so as to instruct the automatic call distributor 2 to invite the user terminal, the agent terminal 2, and the recording client 2 to enter the created conference site.

Step 505: The automatic call distributor 2 separately sends, to the agent terminal 2, the user terminal, and the recording client 2, a request message for requesting to join the conference site, so as to request the agent terminal 2, the user terminal, and the recording client 2 to join the created conference site. Specifically, the automatic call distributor 2 separately sends the request message to the agent terminal 2 and the user terminal by using the switching device.

Step 506: The agent terminal 2, the user terminal, and the recording client 2 separately respond to the request message, separately return a response message to the automatic call distributor 2, and join the conference site. The recording client 2 receives a media packet generated in the conference site. Specifically, both the user terminal and the agent terminal 2 return the response messages to the automatic call distributor 2 by using the switching device.

Step 507: The automatic call distributor 2 sends a notification message to the CTI device, so as to notify the CTI device that the agent terminal 2, the user terminal, and the recording client 2 have joined the conference site.

Step 508: When the user terminal to exit the conference site, the user terminal sends, to the automatic call distributor 1, a request for exiting the conference site. Specifically, the user terminal sends the request for exiting the conference site to the automatic call distributor 1 by using the switching device.

Step 509: The automatic call distributor 1 sends, to the CTI device, a notification that the user terminal exits the conference site.

Step 510: The CTI device responds to the notification of exiting the conference site, and sends, to the automatic call distributor 2, an instruction for releasing the conference site, so as to instruct the automatic call distributor 2 to release the created conference site. Specifically, the

Step 511: The automatic call distributor 2 sends a prompt message to the agent terminal 2 and the recording client 2, so as to prompt the agent terminal 2 and the recording client 2 to exit the conference site. The recording client 2 exits the conference site according to the prompt, and the recording client 2 stops recording a media packet in the conference site. Specifically, the automatic call distributor 2 sends the prompt massage to the agent terminal 2 by using the switching device.

Step 512: After the agent terminal 2 and the recording client 2 exit the conference site, the automatic call distributor 2 releases the conference site and returns, to the CTI device, a notification message of releasing the conference site.

Step 513: After replicating the signaling packets sent by the CTI device, the recording client 1 sends the signaling packets to the recording server according to a preset policy when a buffer meets a specific condition. The signaling packets sent by the CTI device to the recording client 1 include signaling packets that the CTI device sends or receives in the foregoing steps 504, 507, 509, 510, and 512. It should be noted that a step in which the CTI device sends the signaling packets to the recording client 1 is not shown in the figure.

Step 514: The recording server associates and records the media packet received by the recording client 2.

In the foregoing implementation, the recording client 1 starts or stops recording after receiving a recording instruction of the CTI. However, in actual application, the recording client 1 may start or stop recording by listening to a signaling packet in the CTI device, or the recording client 1 may select a specific signaling packet stream or a specific media stream according to a preset recording policy for recording.

### Embodiment 4

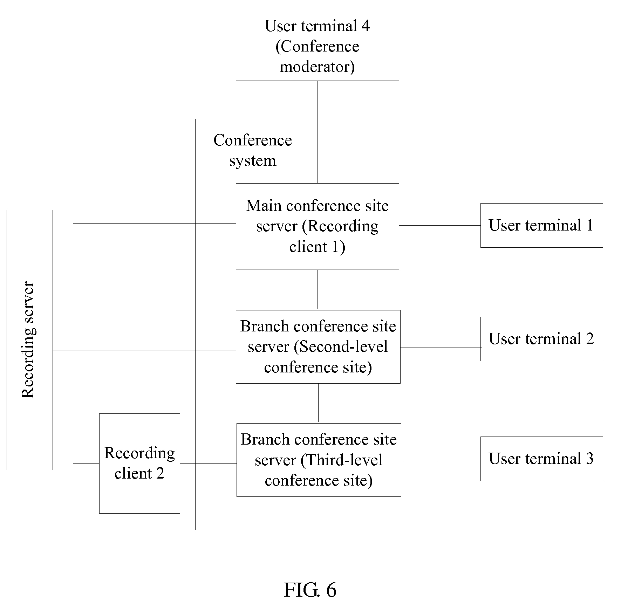

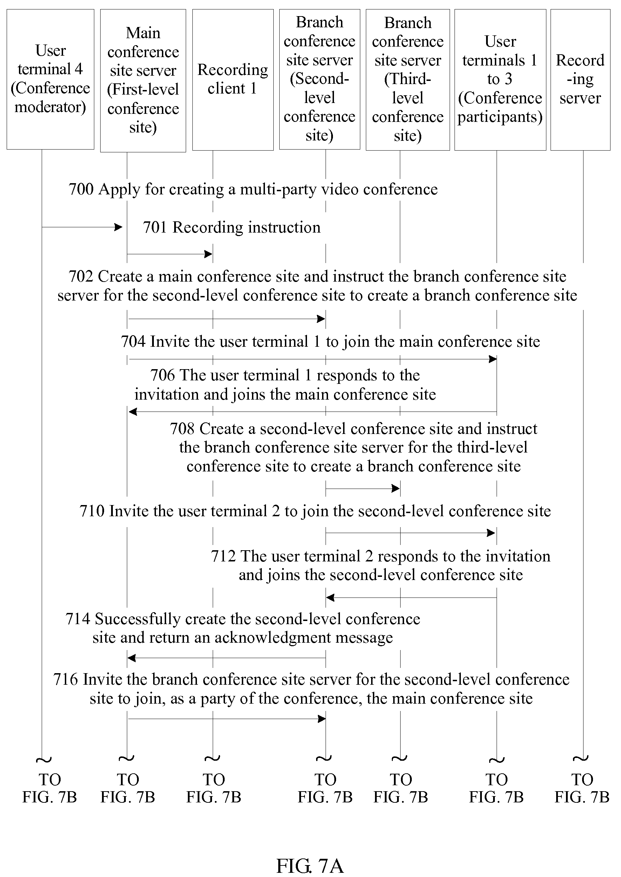

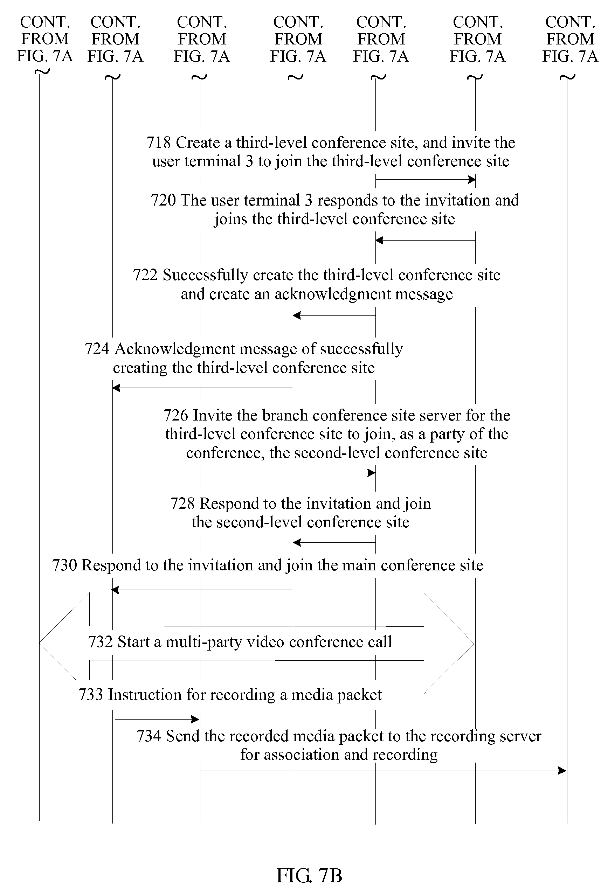

An embodiment of the present invention further provides another application scenario of the foregoing recording server. In this embodiment, a unified communications system is a conference system. For a structure of the conference system, refer to FIG. 6. Specifically, a three-level conference site is used as an example in this embodiment, that is, the conference system includes a main conference site server, a branch conference site server for a second-level conference site, and a branch conference site server for a third-level conference site. In the scenario of this embodiment, a recording client 1 is installed in the main conference site server, and a mirror port ("mirroring" or "Spanning") is configured in the branch conference site server for the second-level conference site. The recording server is connected to the recording client 1 installed in the main conference site server, where the main conference site server instructs the recording client 1 to record a signaling packet and a media packet that pass through the main conference site server, and the recording client 1 sends the recorded signaling packet and media packet to the recording server. The recording server is connected to the mirror port in the branch conference site server for the second-level conference site, where the branch conference site server for the second-level conference site sends, to the recording server using the configured mirror port in a mirroring manner, all signaling packets and media packets that pass through the branch conference site server for the second-level conference site for network communication. The recording server is connected to the branch conference site server for the third-level conference site by using a recording client 2, where the branch conference site server for the third-level conference site adds the recording client 2 to the third-level conference site, and the recording client 2 records a media packet in the third-level conference site and sends the recorded media packet to the recording server. The recording client 2 may be disposed in the recording server or may be disposed outside the recording server. Specifically, in the application scenario, as shown in FIG. 7A and FIG. 7B, a specific process in which the recording server acquires a media packet and a signaling packet includes the following steps:
Step 700: A conference moderator sends, by using a user terminal 4, a request for creating a multi-party video conference to the main conference site server, so as to request the main conference site server to create a multi-party video conference.
Step 702: After receiving the request that is for creating the multi-party video conference and is sent by the user terminal 4, the main conference site server creates a main conference site, and sends an indication message to the branch conference site server for the second-level conference site so as to instruct the branch conference site server for the second-level conference site to create a branch conference site.
Step 704: After the foregoing main conference site is successfully created, the main conference site server sends an invitation request to a user terminal 1 upon the request of the conference moderator, so as to invite the user terminal 1 to join the main conference site.
Step 706: After receiving the foregoing invitation request, the user terminal 1 responds to the invitation, returns a response message to the main conference site server, and joins the main conference site.
Step 708: After step 702 is performed, and after receiving the indication message sent by the main conference site server, the branch conference site server for the second-level conference site creates a second-level conference site according to the indication message and sends an indication message to the branch conference site server for the third-level conference site, so as to instruct the branch conference site server for the third-level conference site to create a third-level conference site.
Step 710: After the second-level conference site is successfully created, the branch conference site server for the second-level conference site sends an invitation request to a user terminal 2, so as to request the user terminal 2 to join the second-level conference site.
Step 712: The user terminal 2 responds to the received invitation request sent by the branch conference site server for the second-level conference site, joins the second-level conference site, and returns a response message to the branch conference site server for the second-level conference site.
Step 714: The branch conference site server for the second-level conference site successfully creates the second-level conference site and sends an acknowledgment message of successfully creating the second-level conference site to the main conference site server.
Step 716: The main conference site server determines, according to the received acknowledgment message, that the second-level conference site has been successfully created, and sends an invitation request to the branch conference site server for the second-level conference site, so as to request the branch conference site server for the second-level conference site to join, as a party of the conference, the foregoing created main conference site.
Step 718: After step 708 is performed, the branch conference site server for the third-level conference site creates a third-level conference site, and sends an invitation request to a user terminal 3 after successfully creating the third-level conference site, so as to request the user terminal 3 to join the created third-level conference site.
Step 720: The user terminal 3 responds to the invitation request sent by the branch conference site server for the third-level conference site and joins the third-level conference site.
Step 722: After successfully creating the third-level conference site, the branch conference site server for the third-level conference site sends an acknowledgment message to the branch conference site server for the second-level conference site.
Step 724: The branch conference site server for the second-level conference site forwards the received acknowledgment message of successfully creating the third-level conference site to the main conference site server.
Step 726: When determining, according to the received acknowledgment message of successfully creating the third-level conference site, that the third-level conference site has been successfully created, the branch conference site server for the second-level conference site further sends an invitation request to the branch conference site server for the third-level conference site, so as to request the third-level conference site to join, as a party of the conference, the second-level conference site.
Step 728: The branch conference site server for the third-level conference site responds to the invitation request sent by the branch conference site server for the second-level conference site, joins the second-level conference site, and returns a response message to the branch conference site server for the second-level conference site.
Step 730: After receiving the response message of joining the second-level conference site that is sent by the branch conference site server for the third-level conference site, and determining, according to the response message, that the third-level conference site has joined the second-level conference site, the branch conference site server for the second-level conference site responds to the invitation request sent by the main conference site server in step 716, sends a response message to the main conference site server, and joins the main conference site. So far, the multi-party video conference is created.
Step 732: After the multi-party video conference is created, the conference moderator user terminal 4 and participants user terminals 1, 2, and 3 communicate each other by using the multi-party video conference.

In addition to the foregoing process of creating the multi-party video conference, recording of creating of the main conference site and branch conference sites (the second-level conference site and the third-level conference site) and recording of a session process are included.

The recording of creation of the main conference site and a session process includes a process in which the main conference site server instructs the recording client 1 to replicate a signaling packet and a media packet in the session and sends the replicated signaling packet and media packet to the recording server.

Specifically, after the main conference site server receives the request that is for creating the multi-party video conference and is sent by the user terminal 4 in step 700, the process includes:
Step 701: The main conference site server sends a recording instruction to the recording client 1, so as to instruct the recording client 1 to replicate and buffer a signaling packet sent by the main conference site server. In this embodiment, the main conference site server sends, to the recording client 1, all signaling packets (including the foregoing request for creating the multi-party video conference) that pass through the main conference site server, and the recording client 1 replicates and buffers the signaling packets.

In addition, after the multi-party video conference is created in step 732, the process includes steps 733 and 734, where:
Step 733: The main conference site server sends a recording instruction to the recording client 1, so as to instruct the recording client 1 to replicate and buffer a media packet in the multi-party video conference communication.
Step 734: After replicating the signaling packet sent by the main conference site server, the recording client 1 sends the signaling packets to the recording server according to a preset policy when a buffer meets a specific condition. The signaling packets sent by the main conference site server to the recording client 1 include signaling packets that the CTI device sends or receives in the foregoing steps 702, 704, 706, 714, 716, 724, and 730. It should be noted that a step in which the main conference site server sends the signaling packets to the recording client 1 is not shown in the figure.

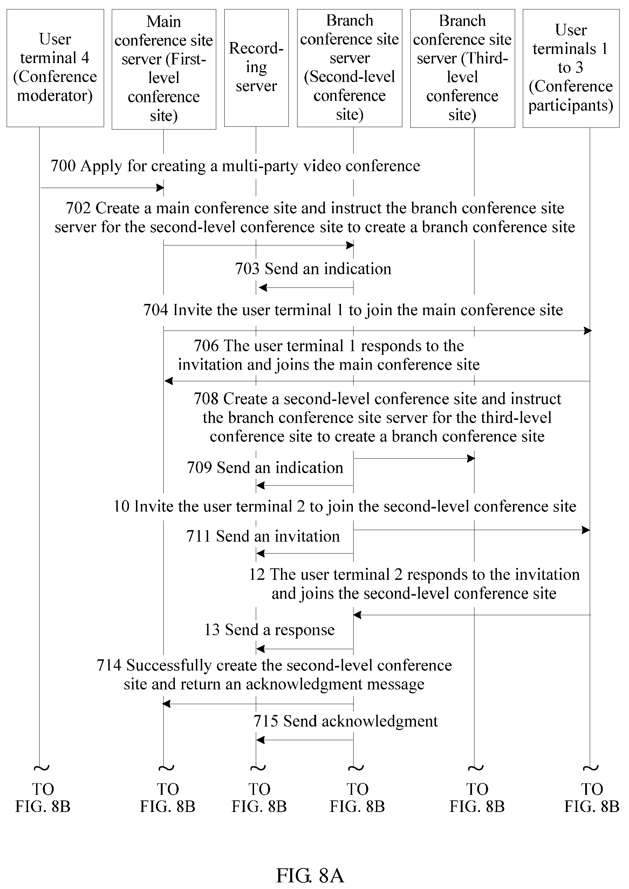

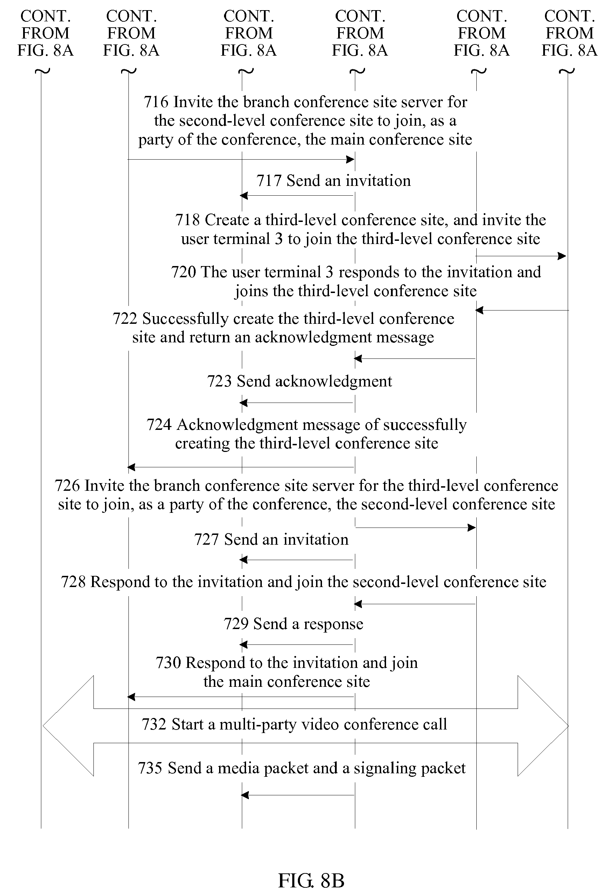

Referring to FIG. 8A and FIG. 8B, recording of creation of the second-level conference site and a session process includes a process in which the branch conference site server for the second-level conference site sends, to the recording server, a message that the branch conference site server for the second-level conference site receives or sends.

Specifically, after steps 702, 708, 710, 712, 714, 716, 722, 724, 726, 728, 730, and732, the following steps are respectively included:
Step 703: The branch conference site server for the second-level conference site sends the received indication message to the recording server.
Step 709: The branch conference site server for the second-level conference site sends the indication message to the recording server.
Step 711: The branch conference site server for the second-level conference site sends, to the recording server, the invitation request for inviting the user terminal 2 to join the second-level conference site.
Step 713: The branch conference site server for the second-level conference site sends, to the recording server, the received response message that the user terminal 2 joins the second-level conference site.
Step 715: The branch conference site server for the second-level conference site sends the acknowledgment message of successfully creating the second-level conference site to the recording server.
Step 717: The branch conference site server for the second-level conference site sends, to the recording server, the invitation request for inviting the second-level conference site to join the main conference site.
Step 723: The branch conference site server for the second-level conference site sends the acknowledgment message of successfully creating the third-level conference site to the recording server.
Step 727: The branch conference site server for the second-level conference site sends, to the recording server, the invitation request for inviting the third-level conference site to join the second-level conference site.
Step 729: After receiving the response message of joining the second-level conference site that is sent by the branch conference site server for the third-level conference site, the branch conference site for the second-level conference site sends the received response message to the recording server.
Step 735: After the multi-party video conference is created, the branch conference site server for the second-level conference site reports a received media packet and a received signaling packet to the recording server.

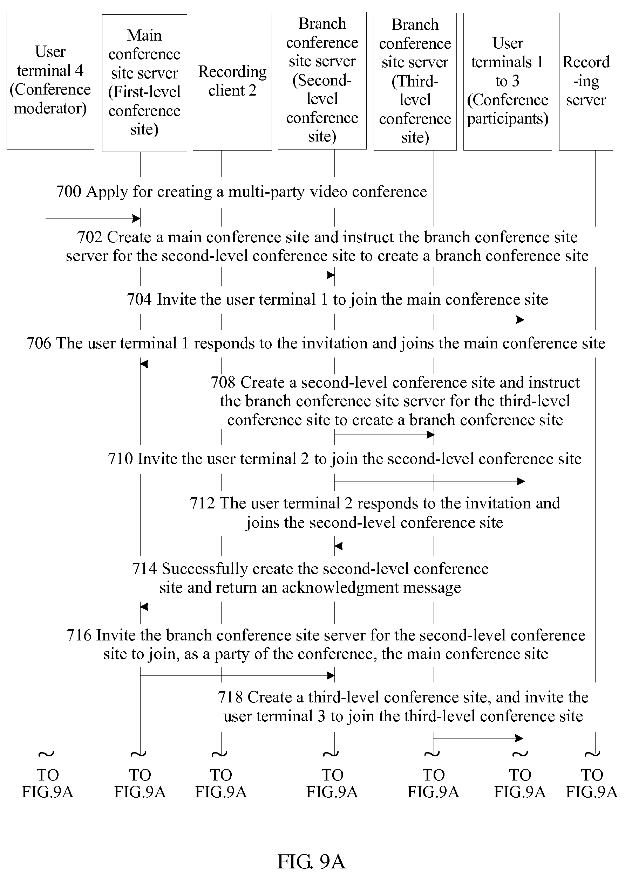

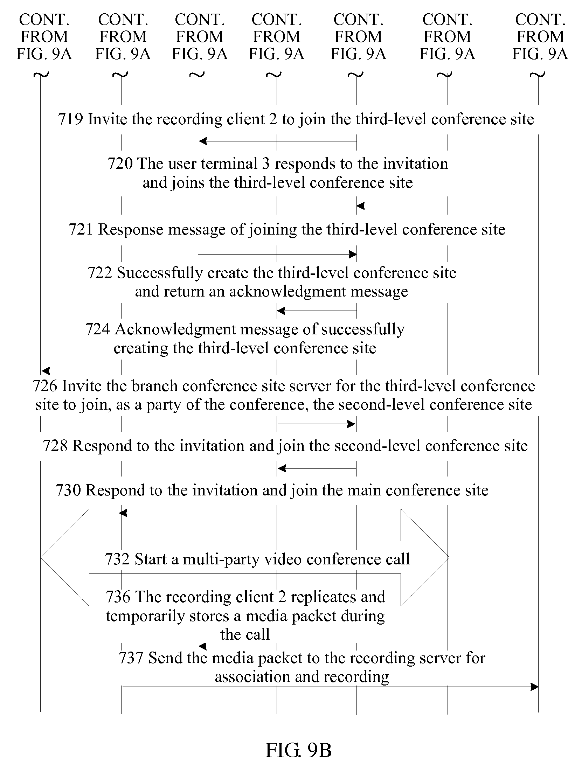

As shown in FIG. 9A and FIG. 9B, a process of recording the third-level conference site includes a process in which the branch conference site server for the third-level conference site invites the recording client 2 to join the third-level conference site, and the recording client 2 replicates a media packet generated in the third-level conference site and sends the replicated media packet to the recording server.

Specifically, after the branch conference site server for the third-level conference site successfully creates the third-level conference site in step 718, steps 719 and 721 are performed, where:
Step 719: The branch conference site server for the third-level conference site sends an invitation request to the recording client 2, so as to request the recording client 2 to join, as a party of the conference, the third-level conference site.
Step 721: The recording client 2 responds to the invitation request of the branch conference site server for the third-level conference site, returns a response message to the branch conference site server for the third-level conference site, and joins the third-level conference site.

In addition, after the multi-party video conference is created in step 732, steps 736 and 737 are performed:
Step 736: The recording client 2 replicates and buffer a media packet in the third-level conference site.
Step 737: The recording client 2 sends the buffered media packet to the recording server according to a preset policy, and the recording server performs association and recording.

Further, when the conference moderator sends a request for ending the conference to the main conference site server, the main conference site server releases the multi-level conference level by level. A specific process is similar to the foregoing process of creating a multi-level conference site and includes the following process:
First, the main conference site server first initiates a request for releasing the multi-level conference site, and the request is successively transmitted to the conference sites at the three levels. The third-level conference site is first released, and after the third-level conference site is released, the recording client 2 stops recording the third-level conference site. Second, the second-level conference site is released, and after the second-level conference site is released, the branch conference site server for the second-level conference site stops sending a signaling packet or a media packet to the recording server. Finally, after the multi-party video conference is successfully released, the main conference site server sends an instruction for stopping recording to the recording client 1, so as to instruct the recording client 1 to stop recording.

Preferably, for the foregoing Embodiment 4, when a participant is set muted, a media stream of the participant is not sent to other participants. For example, if the main conference site is set muted, a media stream in the main conference site is not sent to the branch conference site servers for the second-level conference site and the third-level conference site. Similarly, if the third-level conference site is set muted, a media stream in the third-level conference site is also not sent to the main conference site server and the branch conference site server for the second-level conference site.

In addition, it should be noted that in each of the foregoing embodiments, sequence numbers of the steps do not represent a time sequence of the steps.

In the foregoing embodiment of the three-level conference site, the conference site at each level is separately connected to the recording server, and for the recording server, media packets or signaling packets separately received from the main conference site, the second-level conference site, and the third-level conference site may be repeated. In another application scenario, repetition may occur. Therefore, preferably, this embodiment of the present invention further provides a recording server. In addition to the functions in Embodiment 1, a processor in the recording server has a deduplication function. Specifically, session information further includes a timestamp, and the processor is further configured to deduplicate cached session information according to the timestamp. That is, one of multiple signaling packets of a same timestamp is retained, or one of multiple media packets of a same timestamp is retained, so that not only store space is saved, but also stored information is more concise and clear.

### Embodiment 5

Correspondingly, an embodiment of the present invention further provides a session information recording method, which is executed by the foregoing recording server, where the recording server is connected to a unified communications system and is used to record session information generated in the unified communications system. Specifically, the method includes the following steps:
Step 1001: Acquire the session information generated in the unified communications system, where the session information includes at least one of a media packet and a signaling packet, and the session information includes source information and target information of a session.

Specifically, in the foregoing embodiment, the source information may include a source IP address and may further include a source port number. The target information may include a destination IP address and may further include a destination port number.

Step 1002: When it is determined that first session information that has same source information and same target information as the received session information exists in session information stored in the recording server, and signaling that indicates session termination does not exist in the first session information, cache, according to a cache location index of the first session information in the recording server, the received session information in a first cache block indicated by the cache location index, so that the received session information is associated with the first session information.

Step 1003: When it is determined that first session information that has same source information and same target information as the received session information does not exist in session information stored in the recording server, or when it is determined that first session information that has same source information and same target information as the received session information exists in session information stored in the recording server, and the first session information includes signaling that indicates session termination, cache the received session information in an unused second cache block, and record a cache location index of the second cache block.

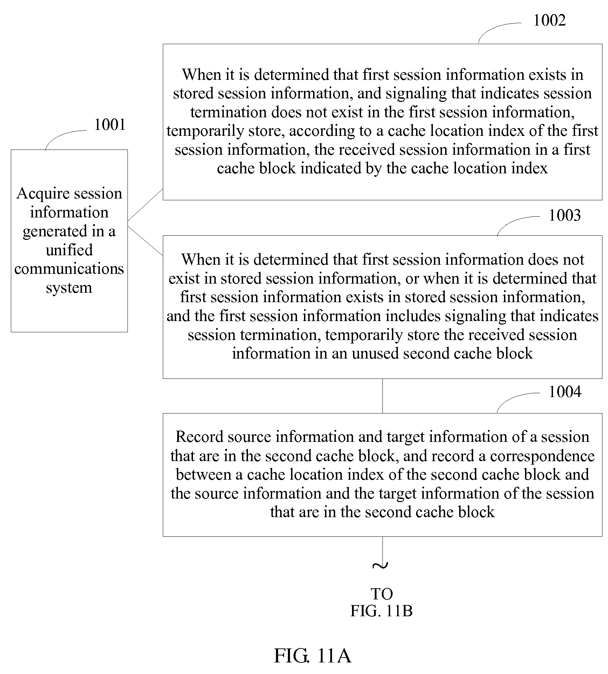

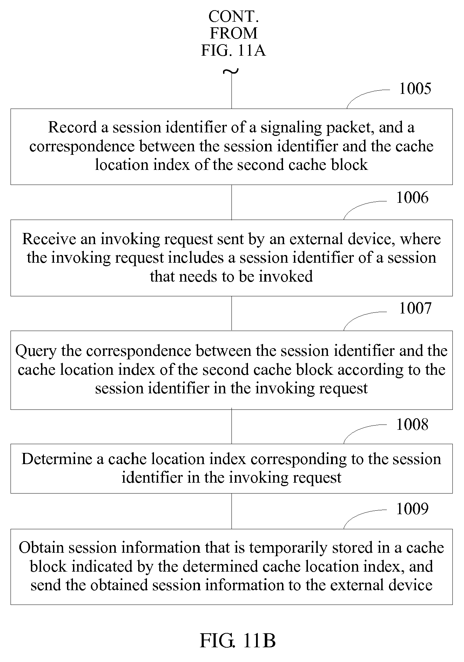

Preferably, determining processes in the foregoing steps 1002 and 1003 may be performed according to records in the recording server. Specifically, referring to FIG. 11A and FIG. 11B, after the received session information is cached in the unused second cache block in step 1003, the method further includes:
Step 1004: Record source information and target information of a session that are in the second cache block, and record a correspondence between the cache location index of the second cache block and the source information and the target information of the session that are in the second cache block.

Correspondingly, the determining that the first session information that has the same source information and the same target information as the received session information exists or does not exist in the session information stored in the recording server in steps 1002 and 1003 specifically includes:
determining, according to the recorded source information and target information, that the first session information that has the same source information and the same target information as the received session information exists or does not exist in the session information stored in the recording server.

Preferably, on the basis of the foregoing embodiment, when the session information in the second cache block includes a signaling packet, and the signaling packet includes a session identifier, referring to FIG. 11A and FIG. 11B, after the received session information is cached in the unused second cache block in step 1003, the method further includes:
Step 1005: Record the session identifier of the signaling packet, and a correspondence between the session identifier and the cache location index of the second cache block.
Step 1006: Receive an invoking request sent by an external device, where the invoking request includes a session identifier of a session that needs to be invoked.
Step 1007: Query the correspondence between the session identifier and the cache location index of the second cache block according to the session identifier in the invoking request.
Step 1008: Determine a cache location index corresponding to the session identifier in the invoking request.
Step 1009: Obtain session information that is cached in a cache block indicated by the determined cache location index, and send the obtained session information to the external device.

It should be noted that the foregoing step 1005 may be performed in parallel with step 1004, or may be performed after step 1004.

Optionally, the session information may include a timestamp, and the recording server deduplicates the cached session information according to the timestamp. That is, one of multiple signaling packets of a same timestamp is retained, or one of multiple media packets of a same timestamp is retained, so that not only cache space is saved, but also stored information is more concise and clear.

In this embodiment of the present invention, a recording server associates and stores, based on a session, received session information regardless of a media packet, a signaling packet, or a combination of a media packet and a signaling packet by uniformly using the foregoing manner, so that association and recording of the media packet and the signaling packet no longer depend on a unified communications server and has more extensive application scenarios.

In addition, an embodiment of the present invention further provides a recording system, where the recording system includes the recording server in the foregoing embodiment and a session information providing device. The session information providing device may include the switching device, the computer telephony integration device, the main conference site server, and the branch conference site server involved in the foregoing method embodiments.

A person of ordinary skill in the art may understand that all or some of the steps of the methods in the embodiments may be implemented by a program instructing relevant hardware. The program may be stored in a computer-readable storage medium. The storage medium may include a ROM/RAM, a magnetic disc, an optical disc, or the like.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention.

## Claims

1. A session information recording method, wherein the method is executed by a recording server, the recording server is connected to a unified communications system and is used to record session information generated in the unified communications system, and the method comprises:
acquiring session information generated in the unified communications system, wherein the session information comprises at least one of a media packet and a signaling packet, and the session information comprises source information and target information of a session; and
when it is determined that first session information that has same source information and same target information as the received session information exists in session information stored in the recording server, and signaling that indicates session termination does not exist in the first session information, caching, according to a cache location index of the first session information in the recording server, the received session information in a first cache block indicated by the cache location index, so that the received session information is associated with the first session information; and
when it is determined that first session information that has same source information and same target information as the received session information does not exist in session information stored in the recording server, or when it is determined that first session information that has same source information and same target information as the received session information exists in session information stored in the recording server, and the first session information comprises signaling that indicates session termination, caching the received session information in an unused second cache block, and recording a cache location index of the second cache block.

2. The method according to claim 1, wherein after the caching the received session information in an unused second cache block, the method further comprises:
recording source information and target information of a session that are in the second cache block, and recording a correspondence between the cache location index of the second cache block and the source information and the target information of the session that are in the second cache block; and
the determining that first session information that has same source information and same target information as the received session information exists or does not exist in session information stored in the recording server specifically comprises:
determining, according to the recorded source information and target information, that the first session information that has the same source information and the same target information as the received session information exists or does not exist in the session information stored in the recording server.

3. The method according to either claim 1 or claim 2, wherein when the session information in the second cache block comprises a signaling packet, and the signaling packet comprises a session identifier, after the caching the received session information in an unused second cache block, the method further comprises:
recording the session identifier in the signaling packet, and a correspondence between the session identifier and the cache location index of the second cache block; and
the method further comprises:
receiving an invoking request sent by an external device, wherein the invoking request comprises a session identifier of a session that needs to be invoked;
querying the correspondence between the session identifier and the cache location index of the second cache block according to the session identifier in the invoking request;
determining a cache location index corresponding to the session identifier in the invoking request; and
obtaining session information that is cached a cache block indicated by the determined cache location index, and sending the obtained session information to the external device.

4. The method according to any one of claims 1 to 3, wherein the unified communications system is a call center system, a mirror port is configured in a switching device of the call center system, and the recording server is connected to the switching device; and
the acquiring the session information generated in the unified communications system comprises:
receiving session information that is sent by the switching device using the mirror port in a mirroring manner and is exchanged on a switch.

5. The method according to any one of claims 1 to 3, wherein the unified communications system is a call center system, and the call center system comprises: a switching device, a first automatic call distributor, a computer telephony integration device, and an agent terminal registered with the first automatic call distributor, wherein: a call that a user terminal initiates to the call center is connected to the first automatic call distributor by using the switching device, and then is submitted to the computer telephony integration device by the first automatic call distributor; the computer telephony integration device assigns the agent terminal registered with the first automatic call distributor for the call; and a first recording client is installed in the computer telephony integration device, and the first recording client is connected to the recording server; and
the acquiring the session information generated in the unified communications system comprises:
receiving session information that is processed by the computer telephony integration device and is sent by the first recording client.

6. The method according to claim 4, wherein the call center system further comprises a second automatic call distributor connected to the computer telephony integration device, and a second recording client is installed in the recording server; and
the acquiring the session information generated in the unified communications system further comprises:
after the second recording client that is installed in the recording server receives an invitation of the second automatic call distributor and then joins a conference site created by the second automatic call distributor, receiving a media packet in the conference site, wherein participants in the conference site further comprise the user terminal and the agent terminal.

7. The method according to any one of claims 1 to 3, wherein the unified communications system is a multi-level conference system, the multi-level conference system comprises a main conference site server and a branch conference site server, a recording client is installed in the main conference site server, a mirror port is configured in the branch conference site server, and the recording server is separately connected to the recording client and the mirror port; and
the acquiring the session information generated in the unified communications system comprises:
receiving session information that is processed in the main conference site server and is sent by the recording client, and session information that is processed in the branch conference site server and is sent by the branch conference site server using the mirror port in a mirroring manner.

8. The method according to any one of claims 1 to 3, wherein the unified communications system is a multi-level conference system, the multi-level conference system comprises a main conference site server and a branch conference site server, a first recording client is installed in the main conference site server, the recording server is connected to the first recording client, and a second recording client is installed in the recording server; and
the acquiring the session information generated in the unified communications system comprises:
receiving session information that is processed in the main conference site server and is sent by the first recording client; and
after the second recording client in the recording server receives an invitation of the branch conference site server and then joins a branch conference site created by the branch conference site server, receiving a media packet in the branch conference site.

9. The method according to any one of claims 1 to 3, wherein the unified communications system is a three-level conference system, and the three-level conference system comprises: a main conference site server, a branch conference site server for a second-level conference site, and a branch conference site server for a third-level conference site, wherein a first recording client is installed in the main conference site server, a mirror port is configured in the branch conference site server for the second-level conference site, the recording server is separately connected to the first recording client and the mirror port, and a second recording client is installed in the recording server; and
the acquiring the session information generated in the unified communications system comprises:
receiving session information that is processed in the main conference site server and is sent by the first recording client, and session information that is processed in the branch conference site server for the second-level conference site and is sent by the branch conference site server using the mirror port in a mirroring manner; and
after the second recording client in the recording server receives an invitation of the branch conference site server and then joins a branch conference site created by the branch conference site server, receiving a media packet in the branch conference site.

10. A recording server, wherein the recording server comprises a network interface, a network interface data transceiving module, a processor, and a cache, wherein:
the network interface data transceiving module is configured to acquire, by using the network interface, session information generated in the unified communications system, and send the acquired session information to the processor, wherein the session information comprises at least one of a media packet and a signaling packet, and the session information comprises source information and target information of a session; and
the processor is configured to: when it is determined that first session information that has same source information and same target information as the session information received from the data transceiving network interface exists in session information stored in the recording server, and signaling that indicates session termination does not exist in the first session information, cache, according to a cache location index of the first session information in the recording server, the received session information in a first cache block that is in the cache and indicated by the cache location index, so that the received session information is associated with the first session information; and
the processor is further configured to: when it is determined that first session information that has same source information and same target information as the session information received from the data transceiving network interface does not exist in session information stored in the recording server, or when it is determined that first session information that has same source information and same target information as the session information received from the data transceiving network interface exists in session information stored in the recording server, and the first session information comprises signaling that indicates session termination, cache the received session information in an unused second cache block in the cache, and record a cache location index of the second cache block.

11. The recording server according to claim 10, wherein:
the processor is further configured to: after the received session information is cached in the unused second cache block, record source information and target information of a session that are in the second cache block, and record a correspondence between the cache location index of the second cache block and the source information and the target information of the session that are in the second cache block; and
that the processor is configured to determine that the first session information that has the same source information and the same target information as the received session information exists or does not exist in the session information stored in the recording server specifically comprises:
determining, according to the recorded source information and target information, that the first session information that has the same source information and the same target information as the received session information exists or does not exist in the session information stored in the recording server.

12. The recording server according to either claim 10 or claim 11, wherein:
the network interface data transceiving module is further configured to receive, by using the network interface, an invitation request that is for joining a conference site and from an external device, return, to the external device by using the network interface, a response message that is for joining the conference site and from the processor, receive a media packet in the conference site, and send the received media packet to the processor; and
the processor is further configured to return, to the external device according to the invitation request and by using the network interface data transceiving module, the response for joining the conference site, and receive the media packet.

13. The recording server according to any one of claims 10 to 12, wherein when the session information in the second cache block comprises a signaling packet, and the signaling packet comprises a session identifier,
the processor is further configured to: after the received session information is cached in the unused second cache block, record the session identifier in the signaling packet and a correspondence between the session identifier and the cache location index of the second cache block;
the network interface data transceiving module is further configured to receive, by using the network interface, an invoking request sent byan external device, wherein the invoking request comprises a session identifier of a session that needs to be invoked, and the network interface data transceiving module sends the invoking request to the processor; and
the processor is further configured to query the correspondence between the session identifier and the cache location index of the second cache block according to the session identifier in the invoking request, determine a cache location index corresponding to the session identifier in the invoking request, obtain session information that is cached in a cache block indicated by the determined cache location index, and send the obtained session information to the external device.
